Europäisches Patentamt

European Patent Office

Office européen des brevets

(11) Veröffentlichungsnummer: **0 419 710 A1**

(12) **EUROPÄISCHE PATENTANMELDUNG**

(21) Anmeldenummer: 89117968.1

(22) Anmeldetag: 28.09.89

(51) Int. Cl.⁵: **H04Q 11/00, H04B 10/24**

(43) Veröffentlichungstag der Anmeldung:
03.04.91 Patentblatt 91/14

(84) Benannte Vertragsstaaten:
AT BE CH DE FR GB IT LI NL SE

(71) Anmelder: **Siemens Aktiengesellschaft**
**Wittelsbacherplatz 2**
**W-8000 München 2(DE)**

(72) Erfinder: **Panzer, Klaus, Dr.-Ing.**
**Nadistrasse 93**
**W-8000 München 40(DE)**
Erfinder: **Neuhaus, Thomas, Dipl.-Ing.**
**Quiddestrasse 35**
**W-8000 München 83(DE)**

(54) **Bidirektionales LWL-Telekommunikationssystem für Wellenlängengetrenntlagebetrieb (Bidirektionales WDM) zwischen einer zentralen Telekommunikationsstelle und einer Mehrzahl von dezentralen Telekommunikationsstellen.**

(57) In einem bidirektionalen Lichtwellenleiter-Telekommunikationssystem mit einem zwischen einer Vermittlungsstelle (VSt) und einer Mehrzahl von Teilnehmerstellen (TSt) verlaufenden passiven LWL-Busnetz (OB) ist lediglich die Vermittlungsstelle für einen normalen WDM-Betrieb ausgelegt und dafür mit einem elektrooptischen Sendeelement (e/o), einem optoelektrischen Empfangselement (o/e) und einem optischen Filter (F) versehen, während in den Teilnehmerstellen jeweils nur ein im Zeitgetrenntlageverfahren arbeitender und für die Aussendung von Licht mit einer solchen Länge, für deren Empfang die Vermittlungsstelle eingerichtet ist, ausgelegter kombinierter optoelektrischer Empfangs-/elektrooptischer Sendebaustein (SM) vorgesehen ist. In diesem kombinierten Empfangs-/Sendebaustein kann die Sendediode alternierend als Empfangsdiode genutzt werden; alternativ dazu kann der kombinierte Empfangs-/Sendebaustein mit einem mit einer Monitor-Fotodiode (MD) versehenen Laser-Modul gebildet sein, dessen Monitor-Fotodiode alternierend als Empfangsdiode genutzt wird.

EP 0 419 710 A1

# BIDIREKTIONALES LWL-TELEKOMMUNIKATIONSSYSTEM FÜR WELLENLÄNGENGETRENNTLAGEBETRIEB (BIDIREKTIONALES WDM) ZWISCHEN EINER ZENTRALEN TELEKOMMUNIKATIONSSTELLE UND EINER MEHRZAHL VON DEZENTRALEN TELEKOMMUNIKATIONSSTELLEN

Neuere Entwicklungen der Fernmeldetechnik führen zu diensteintegrierenden Digitalnetzen (ISDN), die in der Ebene der Teilnehmeranschlußleitungen eine Stern- oder auch Busstruktur von Lichtwellenleitern (LWL) aufweisen; solche mit Lichtwellenleitern ausgestattete Kommunikationsnetze sind für Schmalband-und Breitband-Kommunikation geeignet (DE-PS 24 21 002).

In einem Lichtwellenleiter-Telekommunikationssystem können die Lichtwellenleiter jeweils in beiden Übertragungsrichtungen ausgenutzt werden, und zwar unter Verwendung von z.B. mit einem teildurchlässigen Spiegel oder einem (integriert-op-tischen) Richtkoppler aufgebauten Richtungswei-chen (Zürich Seminar'86 Conf. Papers B3, 1 in Table 1) im Wellenlängengleichlagebetrieb oder auch im Wellenlängegetrenntlagebetrieb, d.h. im sogenannten bidirektionalen Wellenlängenmultiplex (WDM - Wavelength Division Multiplex), unter Verwendung von entsprechenden Wellenlängenfiltern (Zürich Seminar'86 Conf. Papers B3, 3 in Table 1), indem für die Signalübertragung über die (vorzugsweise Monomode-)Lichtleitfaser in der einen Übertragungsrichtung Lichtwellen niedrigerer Wellenlänge und für die Signalübertragung in der anderen Übertragungsrichtung Lichtwellen höherer Wellenlänge verwendet werden. In beiden Fällen sind an den beiden Enden des Lichtwellenleiters entsprechende optische Weichenbausteine vorzusehen, die jeweils eine gesonderte lichtleitende Verbindung vom Lichtwellenleiter zum jeweiligen optoelektrischen Wandler und vom jeweiligen elek-trooptischen Wandler zum Lichtwellenleiter bewir-ken. Richtungsweichen können auch in Verbindung mit einem Zeitgetrenntlagebetrieb vorgesehen sein (Zürich Seminar'86 Conf. Papers B3, 4.1 in Table 1), während umgekehrt bei Zeitgetrenntlagebetrieb keine zusätzlichen Richtungsweichen vorzusehen sind, wenn die lichtemittierende Diode alternierend auch als Empfangsdiode genutzt wird (Zürich Seminar '86 Conf. Papers B3, 4.3 in Table 1).

Die Einführung neuer Telekommunikationssysteme mit LWL-Anschlußleitungen hängt ganz allgemein ab von Art und Umfang der bereits vorhandenen Fernmeldeinfrastrukturen mit den darin bereitgestellten Telekommunikationsdiensten und von der Nachfrage nach neuen Breitbandkommunikationsdiensten. Dabei wird im Bereich der Privathaushalte das potentiell grösste Anschlußvolumen gesehen; dieses Anschlußpotential konkretisiert sich indessen zu einer effektiven Anschlußnachfrage nicht ohne entsprechend niedrige Kosten eines Breitband-Teilnehmeranschlusses.

In diesem Zusammenhang ist es (z.B. aus EP-A2-0 171 080) bekannt, für eine Mehrzahl von (dezentralen) Teilnehmerstellen in deren Vermittlungsstelle nur einen einzigen (gemeinsamen) LWL-Anschluß mit je einem gemeinsamen elektrooptischen Sendeelement und opto-elektrischen Empfangselement vorzusehen, wobei sich zwischen dem gemeinsamen LWL-Anschluß der Ver-mittlungsstelle und den dezentralen Teilnehmerstel-len ein mit optischen Verzweigern versehenes passives LWL-Busnetz erstreckt. Damit wird der diesbezügliche Aufwand in der Vermittlungsstelle entsprechend verringert, nicht jedoch auch der entsprechende teilnehmerseitige Aufwand.

Die Erfindung stellt sich nun die Aufgabe, für ein bidirektionales LWL-Telekommunikationssystem mit Wellenlängengetrenntlagebetrieb (Bidirektionales WDM) zwischen einer zentralen Telekommunikationsstelle und einer Mehrzahl von dezentralen Telekommunikationsstellen einen Weg zu einer weiteren merklichen Aufwandsbegrenzung aufzuzeigen.

Die Erfindung betrifft ein bidirektionales LWL-Telekommunikationssystem für Wellenlängengetrenntlagebetrieb (Bidirektionales WDM) zwischen einer zentralen Telekommunikationsstelle und einer Mehrzahl von dezentralen Telekommunikationsstellen, insbesondere mit einem zwischen einer Vermittlungsstelle und einer Mehrzahl von Teilnehmerstellen verlaufenden passiven LWL-Busnetz; dieses Tele kommunikationssystem ist erfindungsgemäß dadurch gekennzeichnet, daß lediglich in der zen-tralen Telekommunikationsstelle ein elektroopti-sches Sendeelement und ein optoelektrisches Empfangselement vorgesehen sind, die für den Wellenlängengetrenntlagebetrieb ausgelegt sind, während in den dezentralen Telekommunikationsstellen jeweils nur ein wellenlängenfilterfreier, im Zeitgetrenntlageverfahren arbeitender und für die Aussendung von Licht mit einer solchen Wellenlänge, für deren Empfang die zentrale Telekommuni-kationsstelle eingerichtet ist, ausgelegter kombi-nierter optoelektrischer Empfangs-/elektrooptischer Sendebaustein vorgesehen ist.

Die Erfindung bringt den Vorteil mit sich, in einem bidirektionalen LWL-Telekommunikationssystem einen Wellenlängengetrenntlagebetrieb (bidirektionales WDM) zwischen einer zentralen Telekommunikationsstelle und einer Mehrzahl von de-zentralen Telekommunikationsstellen zu ermögli-chen, ohne dazu in den dezentralen Telekommuni-kationsstellen jeweils eine gesonderte Empfangs-diode mit der zugehörigen Faserankopplung vorsehen zu müssen; der zusätzliche Entfall eines wellenlängenselektiven Elements bringt zugleich auch den Entfall der hierdurch bedingten Zusatzdämpfung mit sich, so daß zumindest ein Teil der an sich verringerten Empfangsempfindlichkeit in den dezentralen Telekommunikationsstellen wieder aufgefangen werden kann.

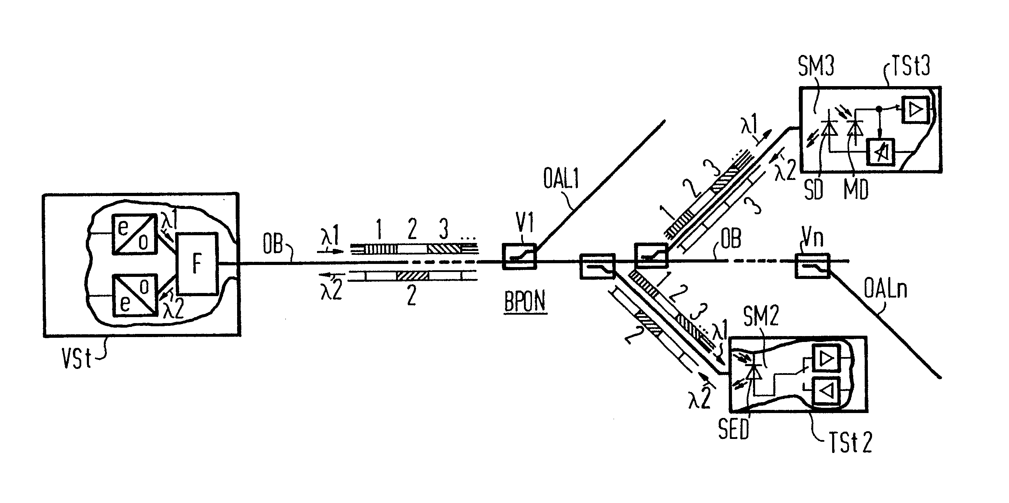

Weitere Besonderheiten der Erfindung werden aus der nachfolgenden näheren Erläuterung eines Ausführungsbeispiels eines Telekommunikationssystems gemäß der Erfindung anhand der Zeichnung ersichtlich.

In der Zeichnung ist schematisch in einem zum Verständnis der Erfindung erforderlichen Umfang ein bidirektionales LWL-Telekommunikationssystem mit einem passiven (vorzugsweise Monomode-)LWL-Busnetz BPON dargestellt, das sich zwischen einer Vermittlungsstelle VSt und einer Mehrzahl von Teilnehmerstellen ...,TSt2, TSt3,... erstreckt. In diesem LWL-Telekommunikationssystem bilden die Teilnehmerstellen ...,TSt2, TSt3,... eine Mehrzahl von dezentralen Telekommunikationsstellen, die über einen einfaserigen LWL-Bus OB mit einem gemeinsamen LWL-Anschluß der eine zentrale Telekommunikationsstelle bildenden Vermittlungsstelle VSt verbunden sind; die teilnehmerindividuellen LWL-Anschlußleitungen OAL1 ...OALn mögen dabei über passive, d.h. nicht wellenlängenselektive, optische Verzweiger V1,...Vn mit dem zugehörigen LWL-Bus OB verbunden sein, und zwar entweder direkt, wie in der Zeichnung explizit dargestellt, oder auch über weitere derartige Verzweiger. Als optische Verzweiger können dabei beispielsweise Durchgangsmischer oder integriert-optische Richtkoppler Anwendung finden.

In dem in der Zeichnung skizzierten Telekommunikationssystem ist zur Richtungstrennung ein Wellenlängengetrenntlagebetrieb (bidirektionaler Wellenlängenmultiplex) vorgesehen, indem zur Signalübertragung in Abwärtsrichtung von der zentralen Telekommunikationsstelle VSt zu den dezentralen Telekommunikationsstellen ...,TSt2, TSt3,... hin Licht einer beispielsweise im 1300-nm-Band liegenden ersten Wellenlänge $\lambda1$ und zur Signalübertragung in Aufwärtsrichtung von den dezentralen Telekommunikationsstellen ..., TSt2, TSt3,... zu der zentralen Telekommunikationsstelle VSt hin Licht einer etwas größeren, beispielsweise im 1500-nm-Band liegenden zweiten Wellenlänge $\lambda2$ verwendet wird. Hierzu sind in der die zentrale Telekommunikationsstelle bildenden Vermittlungsstelle VSt ein entsprechender, zweckmäßigerweise durch eine Laserdiode gebildeter elektrooptischer Wandler e o und ein entsprechender, zweckmäßigerweise durch eine Avalanche-Photodiode gebildeter optoelektrischer Wandler e\o vorgesehen, die mit dem zugehörigen LWL-Bus OB über ein wellenlängenselektives optisches Filter F, beispielsweise einen (z.B.

aus US-A-4 790 616) bekannten mit einem Interferenz-Strahlteiler versehenen optischen Weichenbaustein, verbunden sind.

In den dezentralen Telekommunikationsstellen, nämlich in den Teilnehmerstellen ...,TSt2, TSt3,... ist - anders als in der (zentralen) Vermittlungsstelle VSt - nur ein im Zeitgetrenntlageverfahren arbeitender kombinierter optoelektrischer Empfangs-/elektrooptischer Sendebaustein SM vorgesehen, der mittels einer entsprechenden Sendediode, z.B. einer Laserdiode, Licht der Wellenlänge $\lambda2$ auszusenden vermag, für deren Empfang der optoelektrische Wandler e\o der Vermittlungsstelle VSt eingerichtet ist. Diese Laserdiode wird nun, wie dies in der Zeichnung für die Sendediode SED der Teilnehmerstelle TSt2 angedeutet ist, in einer zweckmäßigen Ausgestaltung der Erfindung alternierend auch als Empfangsdiode für den Empfang des Lichts der Wellenlänge $\lambda1$ genutzt. Laserdioden sind im Empfangsbetrieb zwar nicht ganz so gut wie übliche Empfangsdioden, doch können durchaus noch brauchbare Empfangsempfindlichkeiten erreicht werden.

In einer alternativen Ausgestaltung der Erfindung, wie sie in der Zeichnung bei der Teilnehmerstelle TSt 3 angedeutet ist, kann der kombinierte optoelektrische Empfangs-/elektrooptische Sendebaustein SM auch mit einem mit einer Monitor-Fotodiode MD zur Regelung der Lichtleistung versehenen Laser-Modul gebildet sein, wobei diese Monitor-Fotodiode MD alternierend als Empfangsdiode genutzt wird.

Wie in der Zeichnung angedeutet ist, geht die Signalübertragung von der Vermittlungsstelle VSt abwärts zu den Teilnehmerstellen ...,TSt2, TSt3,... hin in der Weise vor sich, daß alle Teilnehmerstellen ...,TSt2, TSt3,... alle von der Vermittlungsstelle VSt ausgesendeten Bitpakete 1, 2, 3,... empfangen, wobei indessen jede Teilnehmerstelle in an sich bekannter Weise nur die für sie z.B. nach Maßgabe einer Adressierung bestimmten Pakete tatsächlich aufnimmt.

In der umgekehrten Übertragungsrichtung geht die Signalübertragung von den Teilnehmerstellen ... ,TSt2, TSt3,... aufwärts zur Vermittlungsstelle VSt hin in der Weise vor sich, daß, wie dies ebenfalls an sich bekannt ist, den einzelnen Teilnehmerstellen jeweils eine bestimmte Sende-Zeitlage für die Aussendung von Bitpaketen zugeordnet wird, so daß die Bitpakete sich auf dem LWL-Bus nicht überlappen. Nur bei Nichtbelegung des LWL-Busnetzes BPON mit einem zu der betreffenden Teilnehmerstelle gelangenden Paket in Abwärtsrichtung ist in dieser Sende-Zeitlage in der betreffenden Teilnehmerstelle (TSt) deren kombinierter optoelektrischer Empfangs-/elektrooptischer Sendebaustein SM gegebenenfalls im Sendezustand, so daß ein von der betreffenden Teilnehmerstelle (z.B.

TSt2) ausgesandtes Paket in Aufwärtsrichtung zur Vermittlungsstelle VSt hin übertragen wird, wie dies auch in der Zeichnung für ein Paket 2 der Teilnehmerstelle TSt2 angedeutet ist. Außerhalb der der betreffenden Teilnehmerstelle zugeordneten Sende-Zeitlage ist der kombinierte Empfangs-/Sendebaustein SM stets im Empfangszustand, wie dies auch in der Zeichnung angedeutet ist. Eine entsprechende Steuerung des Sendeablaufs kann im Rahmen der - zur Vermeidung einer Überlappung von in Aufwärtsrichtung übertragenen Paketen verschiedener Teilnehmerstellen in an sich (z.B. aus EP-A2-0 171-080) bekannter Weise ohnehin vorzusehenden - teilnehmerseitigen Sendesteuerung bewirkt werden, was hier jedoch nicht näher erläutert werden muß, da dies zum Verständnis der Erfindung nicht erforderlich ist.

**Ansprüche**

1. Bidirektionales LWL-Telekommunikationssystem für Wellenlängengetrenntlagebetrieb |Bidirektionales WDM| zwischen einer zentralen Telekommunikationsstelle (VSt) und einer Mehrzahl von dezentralen Telekommunikationsstellen (TSt), insbesondere mit einem zwischen einer Vermittlungsstelle und einer Mehrzahl von Teilnehmerstellen verlaufenden passiven LWL-Busnetz (BPON),
**dadurch gekennzeichnet,**
daß lediglich in der zentralen Telekommunikationsstelle (VSt) ein elektrooptisches Sendeelement (e/o) und ein optoelektrisches Empfangselement (o/e) vorgesehen sind, die für den Wellenlängengetrenntlagebetrieb ausgelegt sind, während in den dezentralen Telekommunikationsstellen (TSt) jeweils nur ein wellenlängenfilterfreier, im Zeitgetrenntlageverfahren arbeitender und für die Aussendung von Licht mit einer solchen Wellenlänge, für deren Empfang die zentrale Telekommunikationsstelle (VSt) eingerichtet ist, ausgelegter kombinierter optoelektrischer Empfangs-/elektrooptischer Sendebaustein (SM) vorgesehen ist.

2. Telekommunikationssystem nach Anspruch 1,
**dadurch gekennzeichnet,**
daß der kombinierte optoelektrische Empfangs-/elektrooptische Sendebaustein (SM2) mit einer Laserdiode (SED) gebildet ist, die alternierend als Empfangsdiode genutzt wird.

3. Telekommunikationssystem nach Anspruch 1,
**dadurch gekennzeichnet,**
daß der kombinierte optoelektrische Empfangs-/elektrooptische Sendebaustein (SM3) mit einem mit einer Monitor-Photodiode (MD) versehenen Laser-Modul gebildet ist, dessen Monitor-Photodiode (MD) alternierend als Empfangsdiode genutzt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,Y | EP-A-0171080 (SIEMENS) <br> * das ganze Dokument * <br> --- | 1, 2 | H04Q11/00 <br> H04B10/24 |
| Y | DE-A-3822803 (KABELMETAL ELECTRO) <br> * das ganze Dokument * <br> --- | 1, 2 | |
| E | EP-A-0350207 (AMERICAN TELEPHONE & TELEGRAPH) <br> * Spalte 4, Zeilen 30 - 44; Figur 3 * <br> * Spalte 8, Zeilen 32 - 53; Figur 8 * <br> --- | 1, 3 | |
| A | EP-A-0330190 (STANDARD ELECTRIC LORENZ & ALCATEL) <br> * das ganze Dokument * <br> --- | 1, 2 | |
| A | PATENT ABSTRACTS OF JAPAN <br> vol. 10, no. 263 (E-435)(2319) 09 September 1986, <br> & JP-A-61 89735 (NIPPON TELEGRAPH & TELEPHONE) 07 Mai 1986, <br> * das ganze Dokument * <br> ----- | 1, 2 | |

**RECHERCHIERTE SACHGEBIETE (Int. Cl.5 )**

H04Q
H04B

Der vorliegende Recherchenbericht wurde für alle Patentansprüche erstellt

| Recherchenort | Abschlußdatum der Recherche | Prüfer |
|---|---|---|
| DEN HAAG | 05 JUNI 1990 | KURVERS F.J.J. |